# EUROPÄISCHE PATENTSCHRIFT

(11) **EP 3 066 310 B1**
(45) Veröffentlichungstag und Bekanntmachung des Hinweises auf die Patenterteilung: **31.10.2018**
(21) Anmeldenummer: 15707565.6
(22) Anmeldetag: 12.02.2015
(51) Int. Cl.: F01K 7/22, F01K 17/06, F01K 23/10, F22B 37/50

(54) **FLASHTANKDESIGN**
FLASH TANK DESIGN
DESIGN D'UN RÉSERVOIR DE DÉTENTE

(30) Priorität: 05.03.2014 DE 102014203967
(43) Veröffentlichungstag der Anmeldung: 14.09.2016
(73) Patentinhaber: Siemens Aktiengesellschaft, 80333 München (DE)
(72) Erfinder: JURETZEK, Uwe, 91058 Erlangen (DE)
(86) Internationale Anmeldenummer: PCT/EP2015/052960
(87) Internationale Veröffentlichungsnummer: WO 2015/132058

(56) Entgegenhaltungen:
- WO-A1-2005/068905
- WO-A2-2007/077248
- WO-A2-2013/171698
- US-A1- 2005 092 672
- US-A1- 2008 250 789

## Beschreibung

Die Erfindung betrifft einen Wasser-Dampf-Kreislauf einer Kraftwerksanlage, insbesondere einer Gas- und Dampfturbinenanlage, und bezieht sich auf die Aufbereitung und Verwertung von Kesselabwasser. Die Erfindung betrifft ferner ein Verfahren zum Reinigen von Abwasser einer Kraftwerksanlage.

Bei Kraftwerken mit Dampfkesseln kommt es in der Regel zum diskontinuierlichen Anfall von Betriebsabwässern. Insbesondere bei Naturumlauf- und Zwangsumlaufkesseln (Trommelkesseln) besteht der Bedarf über die Abschlämmungen an der Kesseltrommel die Verunreinigungen aus dem Kreislauf zu entfernen.

Bei Kraftwerken mit Trommelkesseln, können die während des Anlagenbetriebes anfallenden Kesselabwässer allgemein in zwei Gruppen eingeteilt werden. Bei "sauberem" Abwasser, also Wasser aus den Entwässerungen im Dampfbereich (Entwässerungen der Überhitzerheizflächen im Kessel), lässt die chemische Beschaffenheit des Abwassers eine direkte Wiederverwendung im Wasser-Dampf-Kreislauf zu. Bei "verunreinigtem" Abwasser aus den Entwässerungen im "Wasserbereich" (Trommelabschlämmungen), bei dem die chemische Beschaffenheit des Abwassers eine direkte Wiederverwendung im Wasser-Dampf-Kreislauf nicht zulässt, ist vor einer Wiederverwendung eine Wiederaufbereitung vorgesehen.

Die "Sauberkeit" des Wassers aus den Entwässerungen im Dampfbereich rührt daher, dass bei der Trennung in Wasser- und Dampfphase in der Kesseltrommel etwaige Verunreinigungen in der Wasserphase verbleiben und der Dampf die Trommel "sauber" verlässt.

Dabei ist die Verringerung des Abwasseranfalles/Wiederverwendung dieser Betriebsabwässer aus Sicht der Verringerung der Betriebskosten wünschenswert. Dem stehen andererseits entsprechende Aufwendungen bei der Erstellung der Kraftwerksanlage gegenüber, so dass eine Minimierung dieses Abwasseranfalles bezogen auf die Wirtschaftlichkeit der Gesamtanlage mit den bisher bekannten technischen Möglichkeiten in der Regel nicht sinnvoll war.

Die anfallenden Betriebsabwässer werden daher meist nur gesammelt und anschließend komplett verworfen, d.h. schlussendlich in das Abwassersystem der Allgemeinheit gegeben. Meist muss dabei zuvor das Abwasser entsprechend den gesetzlichen Randbedingungen aufbereitet werden. Zukünftig ist durch die absehbare weitere Verschärfung der Umweltschutzbestimmungen davon auszugehen, dass eine Reduzierung der Abwassermenge gesetzlich erzwungen wird bzw. die Abwasserabgabe inklusive Aufbereitung derart verteuert wird, dass eine Reduzierung der Abwassermenge wirtschaftlich sinnvoll wird. Außerdem muss dieses Betriebsabwasser durch aufwendig aufbereitetes (vollentsalztes) Kreislaufwasser ersetzt werden, dadurch sind zum einen Investitionskosten bedingt (durch eine ausreichend große Vollentsalzungsanlage) und zum anderen entstehen Betriebskosten.

Darüber hinaus stellt die Abgabe von diesen, in der Regel sehr heißen, Betriebsabwässern des Kessels einen signifikanten Energieverlust dar, der sich während des Betriebes in Wirkungsgrad- und Leistungsverlust der Kraftwerksanlage oder im Stillstand durch schnelleres Abkühlen des Kessels zeigt. Letzteres ist insbesondere bezüglich möglicher Anfahrzeiten und Lebensdauerverbrauch von dickwandigen Kesselkomponenten schädlich.

Bisher wurden die Kesselabwässer - so sie denn nicht grundsätzlich verworfen werden sollten - gesammelt (zum Teil getrennt nach sauberen und kontaminierten Abwässern), gekühlt, nach Bedarf mittels einer Kondensatreinigungsanlage wieder aufbereitet, ggf. zwischengelagert und dem Kreislauf zu einem mehr oder weniger großen Anteil wieder zugeführt. Die in den Abwässern enthaltene Energie wurde bisher (z.T. über spezielle Kühlsysteme) ungenutzt an die Umgebung abgegeben.

Die WO 2007/077248 offenbart zumindest, wie die anfallende zu reinigende Wassermenge verringert werden kann und zwar dadurch, dass die sauberen Kesselabwässer durch einzelnen Druckstufen zugeordnete Sammelrohre erfasst und den jeweiligen Verdampfern direkt wieder zugeführt werden. Dadurch kann insbesondere im Stillstand anfallendes Wasser im Kessel selbst gespeichert werden und es werden keine externen Lagerkapazitäten benötigt.

Aufgabe der Erfindung ist es, einen verbesserten Wasser-Dampf-Kreislauf und ein verbessertes Verfahren zum Reinigen von Abwasser einer Kraftwerksanlage anzugeben.

Erfindungsgemäß wird diese Aufgabe gelöst durch die Vorrichtung gemäß Anspruch 1 und das Verfahren gemäß Anspruch 11. Vorteilhafte Weiterbildungen der Erfindung sind in den jeweiligen abhängigen Ansprüchen definiert. Indem bei einem Wasser-Dampf-Kreislauf einer Kraftwerksanlage umfassend wenigstens ein Niederdruckdampfsystem und einen Behälter für Abwasser aus dem Wasser-Dampf-Kreislauf, der Behälter neben mindestens einer Abwasserzuleitung eine weitere Wärmezufuhr aus dem Wasser-Dampf-Kreislauf und einen Dampfauslass, der über ein Abdampfrohr mit dem Niederdruckdampfsystem des Wasser-Dampf-Kreislaufs verbunden ist, aufweist, wird erreicht, dass im Betrieb der Kraftwerksanlage neben dem durch automatische Ausdampfung von verunreinigten Kesselabwässern im Behälter (Flashtank) entstehenden Dampfanteil der weiterhin anfallende Wasseranteil unter Verwendung von Energie aus dem Wasserdampfkreislauf eingedampft wird und dieser gesamte Dampfmassenstrom in das Niederdruckdampfsystem eingeleitet wird, damit im Kreislauf gehalten wird und zur Leistung des Dampfteils des Kraftwerkes beiträgt.

Durch die Nachverdampfung wird aus verunreinigtem Kesselabwasser sauberer Dampf und die Restabwassermenge wird deutlich reduziert, ggf. vollständig reduziert, indem die Verunreinigungen auskristallisiert werden.

In einer vorteilhaften Ausführungsform der Erfindung umfasst der Wasser-Dampf-Kreislauf weiter ein Mitteldruckdampfsystem, wobei zur weiteren Wärmezufuhr in den Behälter eine Mitteldruckdampfleitung vom Mitteldruckdampfsystem abzweigt und in einen Dampfeinlass des Behälters mündet. Diese Lösung ist besonders kostengünstig, bringt aber einen wenn auch vergleichsweise geringen Wirkungsgradverlust mit sich. Dieser Wirkungsgradverlust fällt aber auch nur dann (und damit sehr sporadisch) an, wenn gerade Kesselabwässer anfallen.

Dabei ist es vorteilhaft, wenn die Mitteldruckdampfleitung von einer kalten Zwischenüberhitzerleitung abzweigt, da beim Anfahren der Kraftwerksanlage zu einem vergleichsweise frühen Zeitpunkt bereits Dampf aus Zwischenüberhitzerleitung verfügbar ist, weil der Hochdruckverdampfer in Betrieb ist. Alternativ kann auch an anderer Stelle Dampf aus dem Mitteldruckdampfsystem entnommen werden, beispielsweise aus der heißen Zwischenüberhitzerleitung. Dies hätte den Vorteil, dass keine Beeinflussung des Abhitzekessels durch die Dampfentnahme zu berücksichtigen wäre.

In einer alternativen Ausführungsform der Erfindung ist zur Wärmezufuhr im Behälter ein Wärmetauscher angeordnet, der im Betrieb primärseitig mit Heißwasser beaufschlagbar ist, dessen Temperatur oberhalb einer dem Verdampfungsdruck im Behälter entsprechenden Temperatur liegt.

Im Hinblick auf das benötigte Temperaturniveau ist es zweckmäßig, wenn zur Beaufschlagung des Wärmetauschers mit Heißwasser der Wärmetauscher mit einem Mitteldruck-Speisewasservorwärmer verbunden ist.

In einer weiteren vorteilhaften Ausführungsform des Wasser-Dampf-Kreislaufs ist eine Treibmedium-seitig mit einem Hoch- oder Mitteldruckdampfsystem verbundene Strahlpumpe so in das Abdampfrohr geschaltet, dass sie Saugmedium-seitig mit dem Dampfauslass des Behälters und Austritt-seitig mit dem Niederdruckdampfsystem verbunden ist. Diese Strahlpumpe senkt den Druck im Behälter ab und verdichtet den im Behälter entstehenden Dampf soweit, dass er dem anschließenden Niederdruckdampfsystem zugeführt werden kann. Damit kann zur Beheizung des Wärmetauschers im Behälter Heißwasser von einem niedrigeren Temperaturniveau benutzt werden. Beispielsweise ist es dann zweckmäßig, wenn zur Beaufschlagung des Wärmetauschers mit Heißwasser, der Wärmetauscher mit einem Kondensatvorwärmer verbunden ist.

Insbesondere kann bei dieser Lösung das Abdampfrohr vorteilhafter Weise in eine zu einer Dampfturbine führenden Niederdruck-Dampfleitung münden. Infolge des Treibdampfes aus dem Hoch- oder Mitteldrucksystem liegt im Abdampfrohr an der Übergabe zum Niederdruckdampfsystem nämlich ein Dampf mit höherer Temperatur vor, als bei den Lösungen ohne Strahlpumpe.

Um insgesamt die aufzubereitende Wassermenge möglichst klein zu halten ist es ferner vorteilhaft, wenn der Wasser-Dampf-Kreislauf wenigstens einen Verdampfer und wenigstens einen dem Verdampfer nachgeschalteten Überhitzer aufweist, sowie eine zwischen dem Überhitzer und dem Verdampfer angeordnete Kondensatsammel- und Rückführleitung zum Auffangen von im Überhitzer vorhandenem Kondensat und zur Rückführung des Kondensats in den Verdampfer.

Im erfinderischen Verfahren zum Reinigen von Abwasser einer Kraftwerksanlage mit einem Wasser-Dampf-Kreislauf, wird das Abwasser in einen Behälter geleitet und neben einem durch automatische Ausdampfung von Abwasser im Behälter entstehenden Dampfanteil wird ein weiterhin anfallender Wasseranteil unter Verwendung von Energie aus dem Wasser-Dampf-Kreislauf eingedampft und der gesamte Dampfmassenstrom wird in ein Niederdruckdampfsystem der Kraftwerksanlage eingeleitet.

Zur Bereitstellung der für die Verdampfung benötigten Energie wird zweckmäßigerweise Mitteldruckdampf oder Hochdruckdampf in den Behälter eingeleitet.

In einem alternativen Verfahren wird ein im Wasserbereich des Behälters angeordneter Wärmetauscher primärseitig mit Wasser einer Temperatur beaufschlagt, die oberhalb einer dem Verdampfungsdruck im Behälter entsprechenden Temperatur liegt.

Im Hinblick auf das benötigte Temperaturniveau ist es vorteilhaft, wenn der Wärmetauscher mit Wasser aus einem Mitteldruck-Speisewasservorwärmer beaufschlagt wird.

Alternativ kann es vorteilhaft sein, wenn mit Hoch- oder Mitteldruckdampf eine Strahlpumpe betrieben wird, und mit der Strahlpumpe ein Druck im Behälter gesenkt wird und ein von der Strahlpumpe abgegebener Dampf einem Niederdruckdampfsystem zugeleitet wird.

Mit dem im Behälter gesenkten Druck ist es dann zweckmäßig, wenn der Wärmetauscher mit Wasser aus einem Kondensatvorwärmer beaufschlagt wird.

Um den Reinigungsaufwand möglichst gering zu halten ist es vorteilhaft, wenn vergleichsweise saubere Kesselabwässer durch einzelnen Druckstufen zugeordnete Kondensatsammel- und Rückführleitungen erfasst und jeweiligen Verdampfern direkt wieder zugeführt werden.

Die danach noch verbleibende geringe Restabwassermenge (auch der Extremfall "gar kein Restabwasser" ist darstellbar) kann dann entweder in das öffentliche Abwassersystem abgegeben werden oder weiteren Aufbereitungsschritten zugeführt werden.

Im Vergleich zu einem System, welches das Abwasser nur sammelt und anschließend verwirft, ist dazu kaum weitere Hardware nötig. Im Gegenteil, durch die entsprechende Reduzierung der Kreislaufzusatzwassermenge können Kosten für die Vollentsalzungsanlage eingespart werden, da diese verkleinert bzw. ganz entfallen kann. Daneben werden die Betriebskosten verringert. Gerade bei dem durch diese Lösung bedingten sehr geringen Wasserbedarf kann eine externe Versorgung über Tankwagen oder eine temporäre Wasseraufbereitungsanlage ohne eigene Regeneration sehr kostengünstig erreicht werden.

Die bisher für eine Wiederverwertung im Wasser-Dampf-Kreislauf erforderlichen kostenaufwendigen Kühlsysteme, Kondensataufbereitungsanlagen, separaten Sammeltanks, etc. entfallen komplett (da die anfallende Wärme wie auch das Wasser von vornherein im Kreislauf gehalten wird, anstatt es erst zu kühlen und danach wieder mittels Kondensatreinigungsanlage aufzubereiten, es zwischen zu speichern und erst dann dem Kreislauf wieder zuzuführen).

Nachdem die Wärme im Kreislauf gehalten wird, ist außerdem der negative Einfluss des Öffnens der Kesselabschlämmungen während des Lastbetriebes auf Leistung und Wirkungsgrad der Kraftwerksanlage reduziert. Demgegenüber steht zwar der Energiebedarf zur Nachverdampfung der "Schmutzwasserphase", in Summe ist das "geschlossene" System nach der Erfindung dem alten "offenen" System bezogen auf Leistung und Wirkungsgrad des Kraftwerkes mindestens ebenbürtig.

Weiterhin verringert das geschlossene System nach der Erfindung insbesondere den Wärmeverlust während des Stillstandes, d.h. die Abkühlung des Kessels geht bei Stillstand entsprechend langsamer vonstatten, was schnelleres Wiederanfahren bei weniger Lebensdauerverbrauch ermöglicht. Außerdem verlängert sich die Zeit in der das Hilfsdampfsystem des Kraftwerkes ohne Zutun eines Hilfskessels aus dem Abhitzekessel versorgt werden kann.

Die Erfindung wird beispielhaft anhand der Zeichnungen näher erläutert. Es zeigen schematisch und nicht maßstäblich:
- Figur 1: ein erstes Ausführungsbeispiel des erfindungsgemäßen Wasser-Dampf-Kreislaufs einer Kraftwerksanlage,
- Figur 2: ein zweites Ausführungsbeispiel des erfindungsgemäßen Wasser-Dampf-Kreislaufs einer Kraftwerksanlage und
- Figur 3: ein drittes Ausführungsbeispiel des erfindungsgemäßen Wasser-Dampf-Kreislaufs einer Kraftwerksanlage.

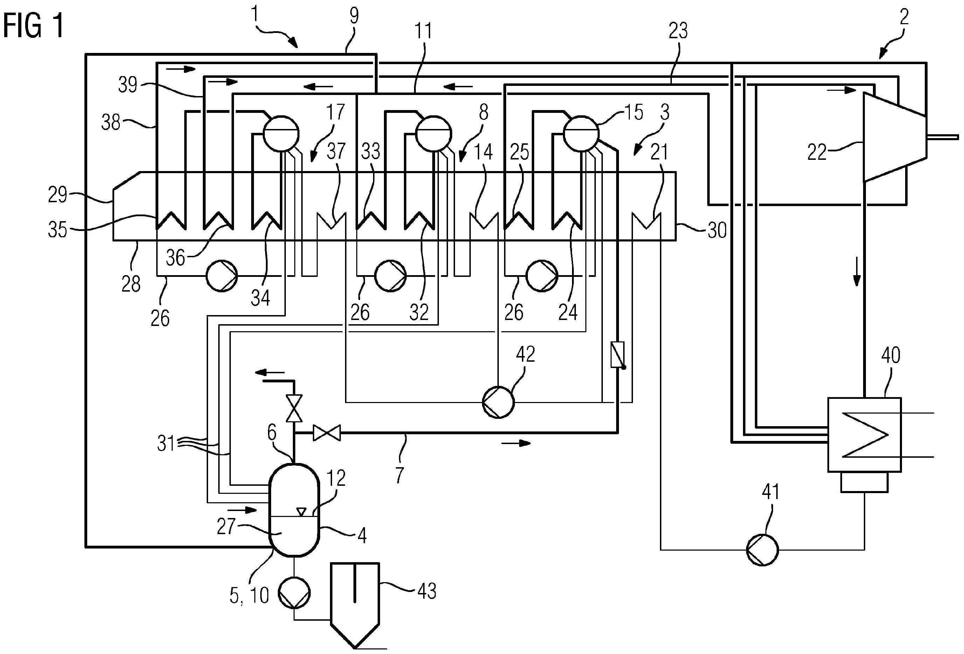

Die Figur 1 zeigt schematisch und stark vereinfacht ein erstes Ausführungsbeispiel des erfindungsgemäßen Wasser-Dampf-Kreislaufs 1 einer Kraftwerksanlage 2 am Beispiel einer Gas- und Dampfturbinenanlage. Eine Gasturbine (nicht gezeigt) ist mit dem Abhitzedampferzeuger 28 verbunden, der zur Erzeugung des Betriebsdampfs der Dampfturbine 22 aus Abwärme der Gasturbine vorgesehen ist.

Die noch etwa 550 bis 650°C heißen Abgase der Gasturbine werden dem Abhitzedampferzeuger 28 zugeführt, durchströmen diesen vom Abgaseingang 29 bis zum Abgasausgang 30 und verlassen den Abhitzedampferzeuger 28 in Richtung auf einen nicht näher dargestellten Kamin.

Der Abhitzedampferzeuger 28 im Beispiel der Figur 1 ist als Mehrdruckkessel mit Naturumlauf ausgeführt und umfasst ein Niederdruckdampfsystem 3, ein Mitteldruckdampfsystem 8 und ein Hochdruckdampfsystem 17. Aber auch bei Abhitzedampferzeugern, welche in einzelnen oder allen Verdampferdruckstufen als Zwangsumlauf oder als Zwangsdurchlaufverdampfer ausgeführt sind, kann diese Erfindung angewendet werden.

Auf ihrem Weg durch den Abhitzedampferzeuger 28 führen die heißen Abgase der Gasturbine ihre Wärme einem Hochdrucküberhitzer 35 zu, dann einem Zwischenüberhitzer 36, des weiteren einem Hochdruckverdampfer 34, einem Hochdruckvorwärmer 37, dann einem Mitteldrucküberhitzer 33, einem Mitteldruckverdampfer 32, einem Mitteldruckvorwärmer (oder auch Mitteldruck-Speisewasservorwärmer) 14, dann einem Niederdrucküberhitzer 25, einem Niederdruckverdampfer 24 und schließlich einem Kondensatvorwärmer 21.

Im Hochdrucküberhitzer 35 überhitzter Dampf wird durch eine Dampfableitung 38 einer Hochdruckstufe der Dampfturbine 22 zugeführt und dort unter Leistung von Arbeit entspannt. Der in der Hochdruckstufe teilweise entspannte heiße Dampf wird anschließend gemeinsam mit Dampf aus dem Mitteldrucküberhitzer 33 dem Zwischenüberhitzer 36 zugeführt, dort erneut bzw. weiter überhitzt und über eine Ableitung 39 einer Mitteldruckstufe der Dampfturbine 22 zugeführt und dort unter Leistung von mechanischer Arbeit entspannt. Der dort teilweise entspannte Dampf wird zusammen mit dem Niederdruckdampf aus dem Niederdruckdampfsystem 3 des Abhitzedampferzeugers 28 einer Niederdruckstufe der Dampfturbine 22 zugeführt und dort unter Abgabe von mechanischer Energie weiter entspannt.

Der entspannte Dampf wird im Kondensator 40 kondensiert, und das so entstehende Kondensat wird über eine Kondensatpumpe 41 nach Erwärmung im Kondensatvorwärmer 21 direkt dem Niederdruckdampfsystem 3 oder über eine Speisewasserpumpe 42 - und von dieser mit entsprechendem Druck versehen - dem Mitteldruckdampfsystem 8 oder dem Hochdruckdampfsystem 17 zugeführt, wo das Kondensat verdampft wird. Nach einer Dampferzeugung und Überhitzung wird der Dampf wieder der Dampfturbine 22 zur Entspannung und Verrichtung mechanischer Arbeit zugeführt.

Im Betrieb der Kraftwerksanlage 2 fallen diskontinuierlich Betriebsabwässer im Wasser-Dampf-Kreislauf 1 an. Insbesondere bei Naturumlauf- und Zwangsumlaufkesseln (Trommelkesseln) besteht daher der Bedarf über die Abschlämmungen an der Kesseltrommel die Verunreinigungen aus dem Kreislauf zu entfernen.

Zu diesem Zweck ist beim Wasser-Dampf-Kreislauf 1 der Figur 1 ein Behälter 4 vorgesehen, der Abwasserzuleitungen 31 aus den Niederdruck 3-, Mitteldruck 8- und Hochdruckdampfsystemen 17 aufweist, über die mit den Abwässern auch Wärme dem Behälter 4 zugeführt wird. Dabei wird ein Teil des eintretenden Abwassers sofort ausdampfen, der andere Teil fällt als siedendes Wasser an. Der Druck im Behälter 4 wird so festgelegt, dass der Behälterinnendruck dem Niederdruckverdampferdruck angepasst ist. Dies wird durch den Dampfauslass 6 am Behälter 4 erreicht, welcher über ein Abdampfrohr 7 an das Niederdruckdampfsystem 3, im Beispiel der Figur 1 an die Niederdrucktrommel 15, anschließt. Dieses Abdampfrohr 7 leitet den durch das Ausdampfen entstehenden Dampf in das anschließende System ein.

Das nach dem Ausdampfen verbleibende Restabwasser wird durch eine weitere Wärmezufuhr 5 aus dem Wasser-Dampf-Kreislauf 1 weiter eingedampft und der entstehende Dampf über das Abdampfrohr 7 dem Niederdruckdampfsystem 3 wieder zugeführt. Zu diesem Zweck wird Mitteldruckdampf aus der kalten Zwischenüberhitzerleitung 11 über eine Mitteldruckdampfleitung 9 in den Behälter 4 eingeleitet. Ein entsprechender Dampfeinlass 10 am Behälter 4 ist im Ausführungsbeispiel unterhalb des Wasserstandes 12 angeordnet. Eine andere Anordnung ist aber auch denkbar.

Die danach noch verbleibende geringe Restabwassermenge kann dann entweder in das öffentliche Abwassersystem abgegeben werden oder weiteren Aufbereitungsschritten 43 zugeführt werden.

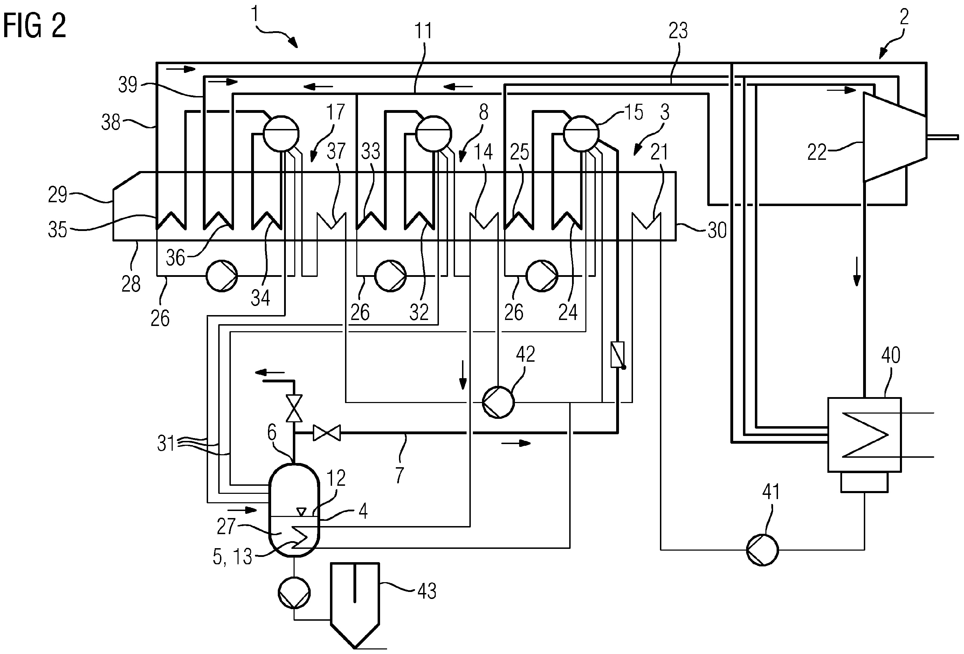

Die Figur 2 zeigt eine weitere Ausführungsform des Wasser-Dampfkreislaufs 1 nach der Erfindung, beim dem mit Heißwasser aus dem Mitteldruck-Speisewasservorwärmer 14 ein im Wasserbereich 27 des Behälters 4 angeordneter Wärmetauscher 13 beheizt wird. Auch in diesem Ausführungsbeispiel mündet das Abdampfrohr 7 in die Niederdrucktrommel 15.

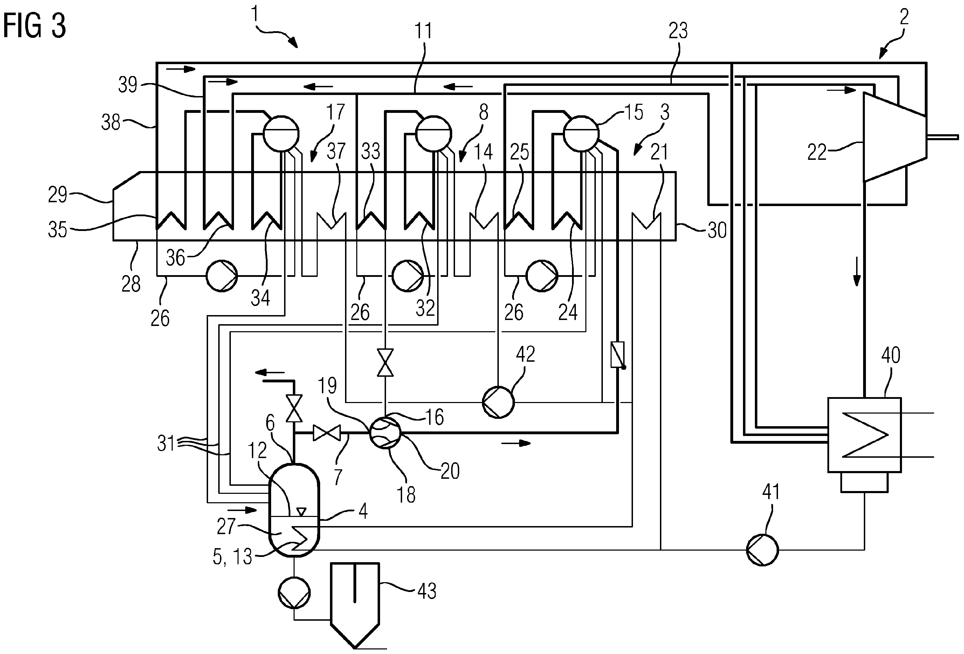

In der Ausführungsform der Figur 3 wird das Beispiel der Figur 2 um eine mit Dampf aus dem Hoch 17- oder Mitteldruckdampfsystem 8 des Abhitzedampferzeugers 28 betriebene Strahlpumpe 18 ergänzt, welche den Druck im Behälter 4 absenkt und den im Behälter 4 entstehenden Dampf soweit verdichtet, dass er der Niederdruckdampfleitung 23 zugeführt werden kann. Damit kann Heißwasser von einem niedrigeren Temperaturniveau zur Beheizung des Wärmetauschers 13 benutzt werden, als im Beispiel der Figur 2.

Dabei ist die Treibmedium-seitig 16 mit dem Mitteldruckdampfsystem 8 verbundene Strahlpumpe 18 so in das Abdampfrohr 7 geschaltet, dass sie Saugmedium-seitig 19 mit dem Dampfauslass 6 des Behälters 4 und Austritt-seitig 20 mit der Niederdruckdampfleitung 23 verbunden ist.

Aufgrund des im Vergleich zur Ausführungsform der Figur 2 niedrigeren notwendigen Temperaturniveaus zur Beheizung des Wärmetauschers 13 ist dieser im Ausführungsbeispiel der Figur 3 mit dem Kondensatvorwärmer 21 verbunden.

In allen Ausführungsbeispielen weist der Wasser-Dampf-Kreislauf 1 zwischen den Überhitzern 25, 33, 35 und den jeweils zugehörigen Verdampfern 24, 32, 34 angeordnete Kondensatsammel- und Rückführleitungen 26 zum Auffangen von in den Überhitzern 25, 33, 35 vorhandenem Kondensat und zur Rückführung des Kondensats in die Verdampfer 24, 32, 34 auf.

Diese Maßnahme ist nicht zwingend, entlastet aber die Wasseraufbereitung im Behälter 4, da die sauberen Kesselabwässer den jeweiligen Verdampfern direkt wieder zugeführt werden und nicht erst den Behälter 4 durchlaufen müssen.

## Patentansprüche

1. Wasser-Dampf-Kreislauf (1) einer Kraftwerksanlage (2) umfassend wenigstens ein Niederdruckdampfsystem (3) und einen Behälter (4) für Abwasser aus dem Wasser-Dampf-Kreislauf (1), **dadurch gekennzeichnet, dass** der Behälter (4) neben mindestens einer Abwasserzuleitung (31) eine weitere Wärmezufuhr (5) aus dem Wasser-Dampf-Kreislauf (1) zur Eindampfung eines anfallenden Wasseranteils unter Verwendung von Energie aus dem Wasser-Dampf-Kreislauf (1) und einen Dampfauslass (6), der über ein Abdampfrohr (7) mit dem Niederdruckdampfsystem (3) des Wasser-Dampf-Kreislaufs (1) verbunden und geeignet ist, den gesamten Dampfmassenstrom in das Niederdruckdampfsystem (3) der Kraftwerksanlage (2) einzuleiten, aufweist.

2. Wasser-Dampf-Kreislauf (1) nach Anspruch 1, weiter umfassend ein Mitteldruckdampfsystem (8), wobei zur Wärmezufuhr eine Mitteldruckdampfleitung (9) vom Mitteldruckdampfsystem (8) abzweigt und in einen Dampfeinlass (10) des Behälters (4) mündet.

3. Wasser-Dampf-Kreislauf (1) nach Anspruch 2, wobei die Mitteldruckdampfleitung (9) von einer kalten Zwischenüberhitzerleitung (11) abzweigt.

4. Wasser-Dampf-Kreislauf (1) nach Anspruch 2, wobei die Mitteldruckdampfleitung (9) von einer heißen Zwischenüberhitzerleitung (11) abzweigt.

5. Wasser-Dampf-Kreislauf (1) nach Anspruch 1, wobei zur Wärmezufuhr im Behälter (4) ein Wärmetauscher (13) angeordnet ist, der im Betrieb primärseitig mit Heißwasser beaufschlagbar ist, dessen Temperatur oberhalb einer dem Verdampfungsdruck im Behälter (4) entsprechenden Temperatur liegt.

6. Wasser-Dampf-Kreislauf (1) nach Anspruch 5, wobei zur Beaufschlagung des Wärmetauschers.(13) mit Heißwasser der Wärmetauscher (13) mit einem Mitteldruck-Speisewasservorwärmer (14) verbunden ist.

7. Wasser-Dampf-Kreislauf (1) nach einem der Ansprüche 1, 5 oder 6, wobei eine Treibmedium-seitig (16) mit einem Hoch (17)- oder Mitteldruckdampfsystem (8) verbundene Strahlpumpe (18) so in das Abdampfrohr (7) geschaltet ist, dass sie Saugmedium-seitig (19) mit dem Dampfauslass (6) des Behälters (4) und Austritt-seitig (20) mit dem Niederdruckdampfsystem (3) verbunden ist.

8. Wasser-Dampf-Kreislauf (1) nach einem der Ansprüche 5 oder 6 und nach Anspruch 7, wobei zur Beaufschlagung des Wärmetauschers (13) mit Heißwasser, der Wärmetauscher (13) mit einem Kondensatvorwärmer (21) verbunden ist.

9. Wasser-Dampf-Kreislauf (1) nach einem der Ansprüche 7 oder 8, wobei das Abdampfrohr (7) in eine zu einer Dampfturbine (22) führenden Niederdruck-Dampfleitung (23) mündet.

10. Wasser-Dampf-Kreislauf (1) nach einem der vorhergehenden Ansprüche, mit wenigstens einem Verdampfer (24) und wenigstens einem dem Verdampfer (24, 32, 34) nachgeschalteten Überhitzer (25, 33, 35) und einer zwischen dem Überhitzer (25, 33, 35) und dem Verdampfer (24, 32, 34) angeordneten Kondensatsammel- und Rückführleitung (26) zum Auffangen von im Überhitzer (25, 33, 35) vorhandenem Kondensat und zur Rückführung des Kondensats in den Verdampfer (24, 32, 34).

11. Verfahren zum Reinigen von Abwasser einer Kraftwerksanlage (2) mit einem Wasser-Dampf-Kreislauf (1), **dadurch gekennzeichnet, dass** das Abwasser in einen Behälter (4) geleitet wird und dass neben einem durch automatische Ausdampfung von Abwasser im Behälter (4) entstehenden Dampfanteil ein weiterhin anfallender Wasseranteil unter Verwendung von Energie aus dem Wasser-Dampf-Kreislauf (1) eingedampft wird und der gesamte Dampfmassenstrom in ein Niederdruckdampfsystem (3) der Kraftwerksanlage (2) eingeleitet wird.

12. Verfahren nach Anspruch 11, wobei Mitteldruckdampf oder Hochdruckdampf in den Behälter (4) eingeleitet wird.

13. Verfahren nach Anspruch 11, wobei ein im Wasserbereich (26) des Behälters (4) angeordneter Wärmetauscher (13) primärseitig mit Wasser einer Temperatur beaufschlagt wird, die oberhalb einer dem Verdampfungsdruck im Behälter (4) entsprechenden Temperatur liegt.

14. Verfahren nach Anspruch 13, wobei der Wärmetauscher (13) mit Wasser aus einem Mitteldruck-Speisewasservorwärmer (14) beaufschlagt wird.

15. Verfahren nach einem der Ansprüche 11 bis 13, wobei mit Hoch- oder Mitteldruckdampf eine Strahlpumpe (18) betrieben wird, und mit der Strahlpumpe (18) ein Druck im Behälter (4) gesenkt wird und ein von der Strahlpumpe (18) abgegebener Dampf dem Niederdruckdampfsystem (3) zugeleitet wird.

16. Verfahren nach Anspruch 15, wobei der Wärmetauscher (13) mit Wasser aus einem Kondensatvorwärmer (22) beaufschlagt wird.

17. Verfahren nach einem der Ansprüche 11 bis 16, wobei vergleichsweise saubere Kesselabwässer durch einzelnen Druckstufen zugeordnete Kondensatsammel- und Rückführleitungen (26) erfasst und jeweiligen Verdampfern (24) direkt wieder zugeführt werden.

## Claims

1. Water-steam circuit (1) of a power plant (2) comprising at least one low-pressure steam system (3) and a vessel (4) for waste water from the water-steam circuit (1), **characterized in that** the vessel (4) has, in addition to at least one waste water inflow line (31), another heat supply (5) from the water-steam circuit (1) for evaporating an accumulating water fraction using energy from the water-steam circuit (1) and a steam outlet (6) that is connected, via a waste steam pipe (7), to the low-pressure steam system (3) of the water-steam circuit (1) and is suitable for introducing the entire steam mass flow into the low-pressure steam system (3) of the power plant (2).

2. Water-steam circuit (1) according to Claim 1, further comprising an intermediate-pressure steam system (8), wherein, for the supply of heat, an intermediate-pressure steam line (9) branches off from the intermediate-pressure steam system (8) and discharges into a steam inlet (10) of the vessel (4).

3. Water-steam circuit (1) according to Claim 2, wherein the intermediate-pressure steam line (9) branches off from a cold reheater line (11).

4. Water-steam circuit (1) according to Claim 2, wherein the intermediate-pressure steam line (9) branches off from a hot reheater line (11).

5. Water-steam circuit (1) according to Claim 1, wherein, for the supply of heat, there is arranged in the vessel (4) a heat exchanger (13) which, during operation, can be charged on the primary side with hot water whose temperature is above a temperature corresponding to the evaporation pressure in the vessel (4).

6. Water-steam circuit (1) according to Claim 5, wherein, for the purpose of charging the heat exchanger (13) with hot water, the heat exchanger (13) is connected to an intermediate-pressure feed water preheater (14).

7. Water-steam circuit (1) according to one of Claims 1, 5 and 6, wherein a jet pump (18), that is connected on the working medium side (16) to a high-pressure (17) or intermediate-pressure (8) steam system, is connected into the waste steam pipe (7) such that it is connected, on the intake medium side (19), to the steam outlet (6) of the vessel (4) and, on the outlet side (20), to the low-pressure steam system (3).

8. Water-steam circuit (1) according to either of Claims 5 and 6 and according to Claim 7, wherein, for the purpose of charging the heat exchanger (13) with hot water, the heat exchanger (13) is connected to a condensate preheater (21).

9. Water-steam circuit (1) according to either of Claims 7 and 8, wherein the waste steam pipe (7) discharges into a low-pressure steam line (23) leading to a steam turbine (22) .

10. Water-steam circuit (1) according to one of the preceding claims, having at least one evaporator (24) and at least one superheater (25, 33, 35) connected downstream of the evaporator (24, 32, 34), and, arranged between the superheater (25, 33, 35) and the evaporator (24, 32, 34), a condensate collection and return line (26) for intercepting condensate present in the superheater (25, 33, 35) and for returning the condensate into the evaporator (24, 32, 34).

11. Method for purifying waste water of a power plant (2) having a water-steam circuit (1), **characterized in that** the waste water is guided into a vessel (4) and **in that**, in addition to a steam fraction produced by automatic evaporation of waste water in the vessel (4), a water fraction that continues to accumulate is evaporated using energy from the water-steam circuit (1) and the total steam mass flow is guided into a low-pressure steam system (3) of the power plant (2).

12. Method according to Claim 11, wherein intermediate-pressure steam or high-pressure steam is introduced into the vessel (4).

13. Method according to Claim 11, wherein a heat exchanger (13) arranged in the water region (26) of the vessel (4) is charged on the primary side with water at a temperature that is above a temperature corresponding to the evaporation pressure in the vessel (4).

14. Method according to Claim 13, wherein the heat exchanger (13) is charged with water from an intermediate-pressure feed water preheater (14).

15. Method according to one of Claims 11 to 13, wherein a jet pump (18) is operated with high-pressure or intermediate-pressure steam, and the jet pump (18) causes a pressure reduction in the vessel (4) and steam issuing from the jet pump (18) is supplied to the low-pressure steam system (3).

16. Method according to Claim 15, wherein the heat exchanger (13) is charged with water from a condensate preheater (22) .

17. Method according to one of Claims 11 to 16, wherein relatively clean boiler waste water is intercepted by condensate collection and return lines (26) assigned to individual pressure stages and is fed directly back to respective evaporators (24).

## Revendications

1. Circuit (1) eau-vapeur d'une centrale (2) électrique, comprenant au moins un système (3) de vapeur de basse pression et une cuve (4) pour de l'eau résiduaire du circuit (1) eau-vapeur, **caractérisé en ce que** la cuve (4) a, outre au moins un conduit (31) d'apport d'eau résiduaire, un autre apport (5) de chaleur du circuit (1) eau-vapeur pour l'évaporation d'une proportion de l'eau se produisant en utilisant de l'énergie du circuit (1) eau-vapeur et une sortie (6) de vapeur, qui communique par un tuyau (7) pour de la de vapeur perdue avec le système (3) de vapeur de basse pression du circuit (1) eau-vapeur et est propre à introduire tout le courant massique de vapeur dans le système (3) de vapeur de basse pression de la centrale (2) électrique.

2. Circuit (1) eau-vapeur suivant la revendication 1, comprenant, en outre, un système (8) de vapeur de moyenne pression, dans lequel, pour l'apport de chaleur, un conduit (9) pour de la vapeur de moyenne pression bifurque du système (8) de vapeur de moyenne pression et débouche dans une entrée (10) de vapeur de la cuve (4).

3. Circuit (1) eau-vapeur suivant la revendication 2, dans lequel le conduit (9) pour de la vapeur de moyenne pression bifurque d'un conduit (11) froid de surchauffeur intermédiaire.

4. Circuit (1) eau-vapeur suivant la revendication 2, dans lequel le conduit le conduit (9) pour de la vapeur de moyenne pression bifurque d'un conduit (11) chaud de surchauffeur intermédiaire.

5. Circuit (1) eau-vapeur suivant la revendication 1, dans lequel, pour l'apport de chaleur à la cuve (4), est prévu un échangeur de chaleur (13), qui, en fonctionnement, peut être alimenté du côté primaire par de l'eau chaude, dont la température est plus haute qu'une température correspondant à la pression d'évaporation dans la cuve (4).

6. Circuit (1) eau-vapeur suivant la revendication 5, dans lequel, pour alimenter l'échangeur de chaleur (13) en eau chaude, l'échangeur de chaleur (13) communique avec un préchauffeur (14) d'eau d'alimentation de moyenne pression.

7. Circuit (1) eau-vapeur suivant l'une des revendications 1, 5 ou 6, dans lequel un éjecteur (18), communiquant du côté (16) du fluide moteur avec un système (8) de vapeur de haute pression (17) ou de moyenne pression, est monté dans le tuyau (7) pour de la vapeur perdue, de manière à ce qu'il communique, du côté (19) du fluide d'aspiration, avec la sortie (6) de la vapeur de la cuve (4) et, du côté (20) de sortie, avec le système (3) de vapeur de moyenne pression.

8. Circuit (1) eau-vapeur suivant l'une des revendications 5 ou 6 et suivant la revendication 7, dans lequel, pour l'alimentation de l'échangeur de chaleur (13) en eau chaude, l'échangeur de chaleur (13) est relié à un préchauffeur (21) de produit condensé.

9. Circuit (1) eau-vapeur suivant l'une des revendications 7 ou 8, dans lequel le tuyau (7) pour de la vapeur perdue débouche dans un conduit (23) de vapeur de basse pression menant à une turbine (22) à vapeur.

10. Circuit (1) eau-vapeur suivant l'une des revendications précédentes, comprenant au moins un évaporateur (24) et au moins un surchauffeur (25, 33, 35), monté en aval de l'évaporateur (24, 32, 34), et un conduit (26) de collecte et de retour de produit condensé, monté entre le surchauffeur (25, 33, 35) et l'évaporateur (24, 32, 34), pour recueillir du produit condensé présent dans le surchauffeur (25, 33, 35) et retourner le produit condensé à l'évaporateur (24, 32, 34).

11. Procédé pour épurer de l'eau résiduaire d'une centrale (2) électrique comprenant un circuit (1) eau-vapeur, **caractérisé en ce que** l'on envoie l'eau résiduaire dans une cuve (4) et **en ce que**, outre une proportion de vapeur se créant par évaporation automatique de l'eau résiduaire dans la cuve (4), on évapore une proportion d'eau se produisant, en outre, en utilisant de l'énergie provenant du circuit (1) eau-vapeur et on envoie tout le courant massique de vapeur dans un système (3) de vapeur de basse pression de la centrale (2) électrique.

12. Procédé suivant la revendication 11, dans lequel on envoie de la vapeur de moyenne pression ou de la valeur de haute pression dans la cuve (4).

13. Procédé suivant la revendication 11, dans lequel on alimente un échangeur de chaleur (13), monté dans la région (26) d'eau de la cuve (4), du côté primaire en eau d'une température, qui est supérieure à la température correspondant à la pression d'évaporation dans la cuve (4).

14. Procédé suivant la revendication 13, dans lequel on alimente l'échangeur de chaleur (13) en eau à partir d'un préchauffeur (14) d'eau d'alimentation de moyenne pression.

15. Procédé suivant l'une des revendications 11 à 13, dans lequel on fait fonctionner un éjecteur (18) de vapeur de haute pression ou de moyenne pression et, par l'éjecteur (18), on abaisse la pression dans la cuve (4) et on envoie une vapeur cédée par l'éjecteur (18) au système (3) de vapeur de basse pression.

16. Procédé suivant la revendication 15, dans lequel on alimente l'échangeur de chaleur (13) en eau provenant d'un préchauffeur (22) de produit condensé.

17. Procédé suivant l'une des revendications 11 à 16, dans lequel on détecte de l'eau résiduaire de chaudière relativement plus propre par des conduits (26) de collecte de retour de produit condensé associés à des étages de pression individuels et on les renvoie directement à des évaporateurs (24) respectifs.
